# EUROPÄISCHE PATENTSCHRIFT

(11) **EP 2 150 737 B1**
(45) Veröffentlichungstag und Bekanntmachung des Hinweises auf die Patenterteilung: **20.07.2011**
(21) Anmeldenummer: 08750348.8
(22) Anmeldetag: 20.05.2008
(51) Int. Cl.: F16K 27/06, F16K 5/06

(54) **KUGELVENTIL AUS KUNSTSTOFF**
BALL VALVE MADE OF PLASTIC
SOUPAPE À BILLE EN PLASTIQUE

(30) Priorität: 24.05.2007 DE 102007024624; 24.05.2007 DE 102007024623; 24.05.2007 DE 102007024625
(43) Veröffentlichungstag der Anmeldung: 10.02.2010
(60) Teilanmeldung: 11166605.3
(73) Patentinhaber: Tappe, Michael, 40221 Düsseldorf (DE); Bersch, Andreas, 64397 Modautal (DE)
(72) Erfinder: Tappe, Michael, 40221 Düsseldorf (DE)
(74) Vertreter: Moser & Götze
(86) Internationale Anmeldenummer: PCT/EP2008/056164
(87) Internationale Veröffentlichungsnummer: WO 2008/142071

(56) Entgegenhaltungen:
- EP-A- 0 575 643
- EP-A- 0 623 770
- WO-A-00/11381
- WO-A-95/29357
- DE-A1- 2 829 286

## Beschreibung

Die Erfindung betrifft ein Kugelventil mit einem Gehäuse aus Kunststoff, in dem eine von dem Kunststoff ummantelte Tragstruktur angeordnet ist, in der eine Ventilkugel mit einer Durchgangsöffnung zwischen einer Offen- und einer Schließstellung drehbar gelagert ist, wobei die Tragstruktur aus zwei gegenüberliegenden, die Ventilkugel aufnehmende Tragringe und einem diese Tragringe verbindenden Verbindungselement besteht, wobei die Tragstruktur die Ventilkugel vollständig von dem Kunststoff des Gehäuses trennt.

Ein derartiges Kugelventil ist aus der europäischen Patentanmeldung EP 6 237 770 A1 bekannt. Das dort beschriebene Kugelventil ist besonders geeignet für eine Verwendung mit Druckgasen und besteht im Wesentlichen aus einer Kugel mit einer Durchgangsöffnung, einem inneren Gehäuse mit einer inneren Gehäusehülse, an die seitlich erste und zweite Zurückhalteringe über eine Umfangsrippe verbunden werden, und einem Außengehäuse, dass aus einer äußeren Gehäusehülse und zwei Anschlussflanschen besteht. Bei einer Montage dieses Kugelventils werden in einem ersten Schritt die Dichtungsringe an den ersten und zweiten Zurückhalteringen angebracht. Dann wird der erste Zurückhaltering von einer Seite in die innere Gehäusehülse gedrückt, soweit bis die Umfangsrippe des Zurückhalterings in eine erste umlaufende Nut der inneren Gehäusehülse einschnappt. Anschließend wird die Kugel von dem anderen noch offenen Ende der inneren Gehäusehülse eingeschoben. Danach wird der zweite Zurückhaltering mit den Dichtungsringen von der gegenüberliegenden Seite in die innere Gehäusehülse eingeschoben, bis die Umfangsrippe in die zweite umlaufende Nut des zweiten Zurückhalterings einschnappt. Hierdurch wird die Kugel in der inneren Gehäusehülse gehalten und die Dichtungsringe sind vorgespannt. Dann wird die so geschaffene Einheit aus den ersten und zweiten Zurückhalteringen, der inneren Gehäusehülse und der Kugel in eine äußere Gehäusehülse geschoben. Anschließend wird die Achse zur Betätigung der Kugel montiert. In einem letzten Schritt werden dann die Anschlussflansche an die Seiten der äußeren Gehäusehülse über Vibrationsschweißen angebracht. Das Ergebnis ist ein äußeres Gehäuse, welches nicht auseinander montiert werden kann und dicht ist. Die äußere Gehäusehülse und die beiden Flanschteile sind aus Kunststoff, vorzugsweise aus Polyethylen. Die innere Gehäusehülse und die Zurückhaltehülse sind aus Polyacetal hergestellt und dünnwandig. Dies ist erforderlich, um gute Federeigenschaften der Schnappverbindung mittels des umlaufenden Steges zu erreichen.

Des Weiteren ist aus der deutschen Patentanmeldung DE 28 29 286 A1 bereits ein weiteres Kugelventil mit einem Gehäuse aus Kunststoff bekannt, Innerhalb dieses Gehäuses sind zwei Stützschalen angeordnet, die in Form einer kugelkalottenförmigen Halbschale ausgebildet sind. Jede der Stützschalen weist eine Dichtlippe auf, die an der Außenoberfläche einer Ventilkugel anliegt. Des Weiteren sind die Stützschalen, die aus einem Dichtungsmaterial hergestellt sind, zweckmäßiger Weise aus einem Stück mit dem jeweiligen Dichtring hergestellt. Auch sind die beiden Halbschalen der Stützschalen über eine Nut- und Federverbindung miteinander verbunden. Die Nut- und Federverbindung sowie die Stützschalen selbst haben die Aufgabe beim Umspritzen der Stützschalen dafür zu sorgen, dass kein Material in den Spalt zwischen der Ventilkugel und den Stützschalen eindringt.

Aus dem europäischen Patent EP 0 575 643 B1 ist ein Kugelventil aus Kunststoff sowie ein Verfahren zu dessen Herstellung bekannt. Das Kugelventil besteht im Wesentlichen aus einem Gehäuse, in dem eine Ventilkugel als Absperrelement gelagert ist. Das Gehäuse weist zwei Rohranschlussstutzen auf, die in üblicher Weise in einer Offenstellung der Ventilkugel über deren Durchgangsbohrung miteinander verbunden sind und in einer Schließstellung über die Ventilkugel voneinander getrennt sind. Das Gehäuse ist einstückig im Spritzgussverfahren und aus Polyäthylen hergestellt. Um aus der Offenstellung in die Schließstellung verdreht werden zu können, ist die Ventilkugel um eine im Wesentlichen - bei horizontal ausgerichteten Rohranschlussstutzen gesehen - vertikale Achse drehbar gelagert und mit einer Schaltwelle zur Betätigung der Ventilkugel verbunden. Die Ventilkugel ist nicht direkt in dem Gehäuse gelagert, sondern über zwei Lagerringe, die über eine ringförmige Einlage miteinander verbunden sind. Die Lagerringe weisen mit dem Innenquerschnift der Rohranschlussstutzen übereinstimmende Öffnungen auf und grenzen in Durchflussrichtung eines Fluids durch das Kugelventil gesehen vorne und hinten an die Ventilkugel an. In der Offenstellung der Ventilkugel fluchtet deren Durchgangsbohrung mit den Öffnungen der Lagerringe. Im Querschnitt gesehen sind die Lagerringe im Wesentlichen dreiecksförmig ausgebildet und überragen somit einen Teil der Außenumfangsfläche der Ventilkugel. In diesem die Ventilkugel überragenden Bereich ist in den Lagerringen jeweils ein Dichtring vorgesehen, der sich auf der Außenumfangsfläche der Ventilkugel abstützt. Als Material für die Dichtringe ist vorzugsweise Nitrilbutyl-Kautschuk vorgesehen. Der der Ventilkugel abgewandte und in Radialrichtung gerichtete Außenumfangsbereich der Lagerringe ist gerippt ausgebildet, wobei die Rippen sich parallel zur Durchflussrichtung des Kugelventil erstrecken. Die äußeren Enden der Rippen der beiden Lagerringe sind über ringförmige Einlage miteinander verbunden. Im vorliegenden Fall ist die ringförmige Einlage mit den Lagerringen verklebt oder verschweißt. Die beiden Lagerringe mit den Dichtringen und die Einlage bilden somit eine Art Tragkäfig für die Ventilkugel. Die Lagerringe, die Ventilkugel und die Einlage können aus Rotguss, Messing, Edelstahl oder Kunststoff, vorzugsweise glasfaserverstärktem Kunststoff oder Polypropylen, hergestellt sein. Zusätzlich sind in der ringförmigen Einlage Durchtrittsöffnungen vorgesehen, damit während des Herstellungsprozesses der eingespritzte Kunststoff des Gehäuses durch die Durchtrittsöffnungen in Richtung der Ventilkugel und in Richtung der Rippen eindringen kann. Der Gehäusekunststoff dringt hierbei bis auf die Oberfläche der Ventilkugel vor. Hierdurch wird ein inniger Verbund zwischen dem Material des Gehäuses und der Lagerringe sowie der Einlage in Form einer Einbettung geschaffen. Die Einlage hat die Aufgabe, nach Art einer Bewehrung die Zug-, Druck- und Bewegungskräfte sowie auftretende Drehmomente innerhalb des Kugelventils aufzunehmen.

Für die Herstellung des Kugelventils werden in einem der ersten Arbeitsschritte die Lagerringe mit den Dichtringen auf die gegenüberliegenden Enden der Ventilkugel aufgesetzt. Anschließend wird die ringförmige Einlage über die beiden Lagerringe geschoben. Dann wird über einen Klebe- oder Schweißvorgang die ringförmige Einlage an deren Enden mit den beiden Lagerringen verbunden. Dieser aus der Ventilkugel, den Lagerringen und der Einlage bestehende Tragkäfig wird nun in eine Spritzgussform eingelegt und anschließend von dem Gehäusewerkstoff umspritzt und durchdringen. Bei diesem Spritzvorgang haben die Durchtrittsöffnungen der Einlage die Aufgabe, das während des Spritzgießvorgangs entstehende Gehäuse in ein Außen- und ein Innenteil zu trennen. Bei der Abkühlung des in der Spritzform erzeugten Gehäuses wird ein Schrumpfvorgang der beiden Gehäuseteile relativ zueinander erzwungen und ein Schrumpfen des Gehäuses radial nach innen verhindert. Hierdurch soll ein Klemmen der Ventilkugel im Gehäuse vermieden werden. Um ein Spiel zwischen der Ventilkugel und dem Kunststoffgehäuse zu erhalten, wird vor dem Spritzen des Gehäuses die Ventilkugel erwärmt.

Des Weiteren ist aus dem europäischen Patent EP 1 121 549 B1 ein weiteres Absperrventil aus Kunststoff sowie ein Verfahren zu dessen Herstellung bekannt. Dieses Absperrventil stimmt im grundsätzlichen Aufbau abgesehen von der Einlage, die die beiden Lagerringe miteinander verbindet, mit dem vorbeschriebenen Kugelventil überein. Nach diesem Patent wird die Einlage in zwei Schritten als Spritzteil hergestellt. In einem ersten Schritt wird ein Formteil hergestellt, das vorzugsweise aus einem thermoplastischen Kunststoff, insbesondere einem Adhäsions-Copolymer besteht, gespritzt. Dieses Formteil bildet die Außenform der Einlage und somit auch die Innenform des später aus Polyäthylen aufgespritzten Gehäuses. In einem zweiten Herstellungsschritt wird von innen auf das Formteil ein Kunststoff, vorzugsweise ein glasfaserverstärktem Kunststoff oder Polypropylen, aufgespritzt. Beim Aufspritzen dieses Kunststoffes auf das Formteil schmilzt dieses teilweise auf und es bildet sich eine Schmelzschweißverbindung zwischen dem Formteil und dem in dem zweiten Verfahrensschritt eingebrachten Kunststoff. Die Einlage besteht somit aus einer ersten äußeren Schicht aus thermoplastischen Kunststoff, insbesondere einem Adhäsions-Copolymer, und einer zweiten inneren Schicht aus einem Kunststoff, vorzugsweise einem glasfaserverstärktem Kunststoff oder Polypropylen. Auch weist diese Einlage die vorbeschriebenen Durchtrittsöffnungen auf, damit bei dem letzten Herstellungsschritt des Absperrventils das eingespritzte Polyäthylen für das Gehäuse durch die Durchtrittsöffnungen der Einlage hindurch bis auf die Ventilkugel treten kann und somit die Einlage in den Gehäusewerkstoff eingebettet ist.

Des Weiteren ist aus der europäischen Patentschrift EP 0 756 681 B1 ein Kugelhahn mit einer Ventilkugel und mit einem zweiteiligen Gehäuse bekannt. Das Gehäuse ist mittig und in Durchflussrichtung gesehen quer in einer Ebene geteilt, die zentral eine Stellachse der Ventilkugel schneidet. Die Gehäusehälften weisen eine Aussparung für die Aufnahme eines Kugelhahneinsatzes auf. Der Kugelhahneinsatz wird während der Montage in das zweiteilige Gehäuse eingesetzt und die beiden Gehäusehälften mittels Schrauben miteinander verspannt. Da der Kugelhahneinsatz gegenüber der Aussparung in dem Gehäuse ein Übermaß aufweist, erfolgt die Abdichtung über die erzielte Vorspannung. Dieser Kugelhahneinsatz besteht im Wesentlichen aus der Ventilkugel mit einer Schaltwelle und einem gegenüberliegenden Lagerzapfen, die insgesamt von einer nahtlosen Auskleidung umgeben sind, die in Durchflussrichtung gesehen vorne und hinten einen Flansch aufweist. Da die Auskleidung des Kugelhahneinsatzes von Flansch zu Flansch nahtlos und durchgehend ist sowie aus einem Fluorkunststoff wie PFA, PTFE oder FEP hergestellt ist, haben die weiteren Teile des Kugelhahneinsatzes keinen Mediumkontakt und brauchen nicht aus so hochwertigen Werkstoffen hergestellt werden. Für eine Demontage der Ventilkugel ist die Auskleidung zu teilen und somit zu zerstören. Die Ventilkugel ist innerhalb der Auskleidung drehbar und liegt an der Oberfläche der Ventilkugel und teilweise am Lagerzapfen und der Schaltwelle an. An der der Ventilkugel abgewandten Außenweite der Auskleidung ist eine elastische Einlage angeordnet, die von einem weiteren Gehäusekörper des Kugelhahneinsatzes umgriffen wird. Die elastische Einlage hat die Aufgabe die Auskleidung gegenüber dem Gehäusekörper abzudichten. Der Gehäusekörper kann aus Metall oder Kunststoff hergestellt werden und ist dann für die Montage hälftig geteilt. Auch kann der Gehäusekörper ungeteilt aus gespritztem Kunststoff hergestellt werden. Die Verarbeitungstemperatur des Kunststoffs des Gehäusekörpers muss dann unter der der Auskleidung und der elastische Einlage liegen. Zusätzlich sind die Auskleidung und der Gehäusekörper mechanisch, formschlüssig oder über eine Verklebung mittels eines Haftvermittlers verbunden. Um den Kugelhahneinsatz im Bereich der Schaltwelle abzudichten, weist der Kugelhahneinsatz zusätzlich ein Druckstück auf, das auf der elastischen Einlage ruht und von einem hülsenförmigen und die Schaltwelle konzentrisch umgebenden Druckflansch in Richtung der Auskleidung soweit vorgespannt wird, bis die gewünschte Dichtigkeit erreicht wird.

Ausgehend von diesem Stand der Technik liegt der vorliegenden Erfindung die Aufgabe zugrunde, ein Kugelventil aus Kunststoff zu schaffen, das sich durch eine einfache Herstellung und verbesserte Dichtigkeit auszeichnet.

Diese Aufgabe wird durch ein Kugelventil mit den Merkmalen des Anspruchs 1 gelöst. Vorteilhafte Ausgestaltungen der Erfindung sind in den Ansprüchen 2 bis 8 beschrieben.

Erfindungsgemäß wird bei einem Kugelventil mit einem Gehäuse aus Kunststoff, in dem eine von dem Kunststoff des Gehäuses ummantelte beziehungsweise umspritzte Tragstruktur angeordnet ist, in der eine Ventilkugel mit einer Durchgangsöffnung zwischen einer Offen- und einer Schließstellung drehbar gelagert ist, wobei die Tragstruktur aus zwei gegenüberliegenden, die Ventilkugel aufnehmende Tragringe und ein diese Tragringe verbindendes Verbindungselement besteht, wobei die Tragstruktur die Ventilkugel vollständig von dem Kunststoff des Gehäuses trennt, eine einfachere Herstellung und vereinfachte Montage dadurch erreicht, dass die Tragstruktur von dem Kunststoff umspritzt ist, dass an dem Verbindungselement Anlageflächen und an den Tragringen Anlageflächen derart angeordnet sind, dass nach einer Verbindung der Tragringe über das Verbindungselement die Tragringe einen vorgewählten Abstand zueinander aufweisen, so dass ein geringer Spalt zwischen der Ventilkugel und den Tragringen verbleibt, dass die Tragringe in das hülsenförmige Verbindungselement eingesteckt sind und jeweils über ein Halteteil in der eingesteckten Position gehalten sind und dass der Kontaktbereich zwischen den Tragringen und dem Verbindungselement abgedichtet oder verklebt ist. Somit kann ein gewünschtes Spiel in Form eines Spalts zwischen der Außenfläche der Ventilkugel und der Innenfläche der Tragstruktur allein durch die Dimensionierung dieser Bauteile eingestellt werden und wird nicht während der Erstellung des Gehäuses des Kugelventils im Spritzgussverfahren verändert. Die erfindungsgemäße Tragstruktur zusammen mit der Ventilkugel bildet bereits ein funktionsfähiges in sich geschlossenes Kugelventil aus. Um die Tragstruktur einfach an vorhandene Rohrleitungsnetze, die üblicher Weise aus Polyäthylen sind, anschließen zu können, wird die Tragstruktur mit dem Gehäuse aus Polyäthylen umspritzt, das auch den Anschlussstutzen ausbildet. In diesem Kugelventil wird die Absperrfunktion von der Tragstruktur mit der Ventilkugel und die Verbindungsfunktion von dem Gehäuse mit den Anschlussstutzen übernommen. Da die Tragstruktur geschlossen ist, ist während des Spritzvorganges des Gehäuses eine Erwärmung der Ventilkugel nicht erforderlich. Es ist nur darauf zu achten, dass die Schrumpfkraft des Gehäuses die Tragstruktur nicht beschädigt. Dieser Aufbau erreicht auch, dass die während des Betriebs des Kugelventils auf die Ventilkugel einwirkenden Kräfte sicher in die Tragringe geleitet werden, ohne den Spalt zwischen der Ventilkugel und den Tragringen maßgeblich zu verändern. Auch ist durch diese Bauweise die Dichtigkeit des Kugelventils verbessert.

Eine einfache Montage der Tragstruktur ergibt sich dadurch, dass die Tragringe von gegenüberliegenden Enden in das Verbindungselement eingesteckt und die Tragringe an einem stufenartigen Ansatz eine Anlagefläche ausbilden, die an einer Anlagefläche, die an einem an einer stufenartigen Erweiterung des Verbindungselementes ausgebildet ist, anliegt.

Konstruktiv besonders einfach ist vorgesehen, dass das Halteteil als unförmig Klammer mit einem langen Schenkel und einem kurzen Schenkel ausgebildet ist, der lange Schenkel in Kontakt mit dem Tragring steht und der kurze Schenkel sich an dem Verbindungselement abstützt.

Die Montage der Tragstruktur wird weiterhin dadurch erleichtert, dass das ringförmige Halteteil zweiteilig ausgebildet, über ein Gelenk aufklappbar und eine Rastverbindung schließbar ist.

Um die Stabilität der Anschlussstutzen zu verbessern, ist vorgesehen, dass die Tragringe an ihren der Ventilkugel abgewandten Seiten ein röhrförmiges Anschlussteil aufweisen, das von dem Teil des Kunststoffes des Gehäuses umschlossen ist, der einen Anschlussstutzen ausbildet.

Als Werkstoffe für die Bauteile des Kugelventils haben sich als besonders vorteilhaft heraus gestellt, dass das Gehäuse aus einem thermoplastischem Kunststoff, insbesondere Polyäthylen oder Polyvinylchlorid, oder einem Elastomer gespritzt ist, die Tragstruktur, die aus den Tragringen, dem Verbindungselement und den Halteteilen besteht, aus einem wärmefesten technischen Hochleistungskuriststoff, insbesondere glasfaserverstärktem Polyamid, gespritzt ist, die mit dem Gehäuse in Verbindung stehenden Flächen mit einer Verbindungsschicht als Haftvermittler beschichtet sind und die mit dem Medium in Verbindung stehenden Flächen der Tragstruktur mit einer mediumbeständigen Schutzschicht beschichtet sind. Diese Tragstruktur kann die auf die Ventilkugel einwirkenden Kräfte sicher aufnehmen und auf Grund der geringen Verformung der Ventilkugel auch unter Druck bleibt das Dichtelement sicher in Kontakt mit der Ventilkugel. Unter Medium beständig ist hier zu verstehen, dass die Kunststoffe nicht von den in den Rohrleitungen und somit durch die Kugelventile geführten Stoffen, wie Gase, Wasser, Rohöle oder chemische Erzeugnisse, angegriffen werden.
Besonders vorteilhaft ist vorgesehen, dass die Ventilkugel nach Art eines Verbundbauteils aus einem Tragelement und einer das Deckschicht aufgebaut ist, die Deckschicht das Tragelement vollständig umgibt und das Tragelement aus einem wärmefesten technischen Hochleistungskunststoff, insbesondere glasfaserverstärktem Polyamid, und die Deckschicht aus einem Medium resistenten Kunststoff, insbesondere Fluorkunststoff, Polyäthylen, Polyoxymethylen oder einem Elastomer, hergestellt sind. Dadurch dass das Traggerüst aus einem technischen Hochleistungskunststoff hergestellt ist und auch die Ventilkugel sehr formbeständig ist, wird einerseits die Dichtigkeit der Kugelventils erhöht und andererseits weder die Tragstruktur noch die Ventilkugel auch unter hohen Drücken nennenswert verformt, so dass eine Leichtgängigkeit der Ventilkugel in der Tragstruktur erhalten bleibt und somit keine hohen Losbrechmomente für den Schaltvorgang des Kugelventils benötigt werden. Auch ist das erforderliche Drehmoment über den Verstellbereich der Ventilkugel gleichbleibend. Die Verbundbauweise der Ventilkugel führt zu deren Leichtbau, einer Gewichtsersparnis und einer Materialeinsparung. Außerdem können die Deckschichten vorteilhafter Weise an die Anforderungen des Mediums einfach angepasst werden.

Nachfolgend wird die Erfindung anhand eines in einer Zeichnung dargestellten Ausführungsbeispiels näher erläutert. Es zeigen:
Figur 1 einen Längsschnitt durch ein Kugelventil,
Figur 2 eine Detailansicht eines Ventilkörpers des Kugelventils nach Figur 1,
Figur 3 eine Seitenansicht von Figur 2 und
Figur 4 eine vergrößerte Detailansicht eines Dichtelements des Kugelventils nach
Figur 1.

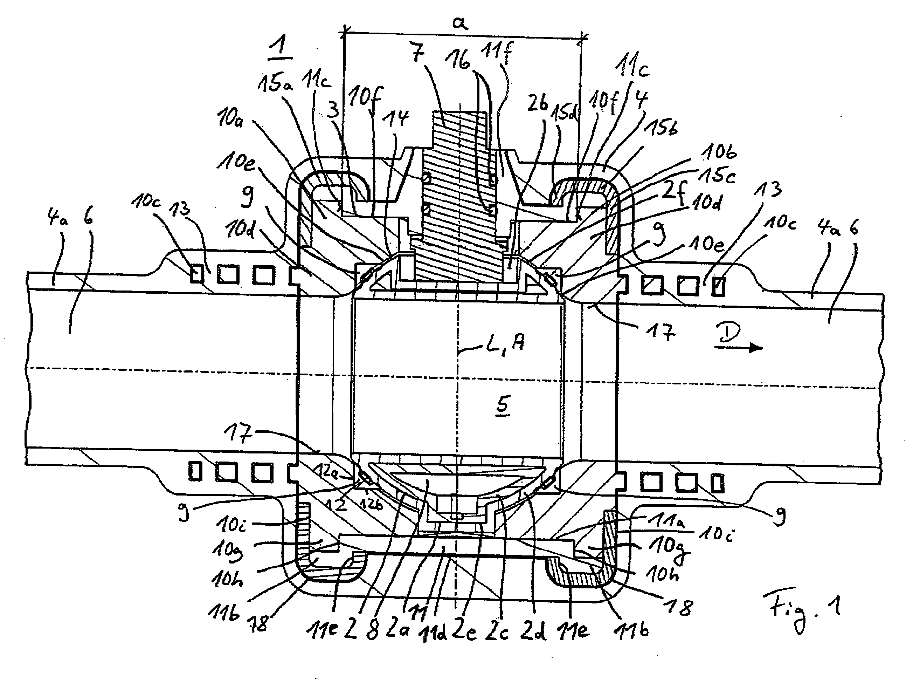

Die Figur 1 zeigt einen Längsschnitt durch ein Kugelventil 1 nach der vorliegenden Erfindung. Von innen nach außen gesehen besteht das Kugelventil 1 im Wesentlichen aus einer Ventilkugel 2, einer Tragstruktur 3 und einem Gehäuse 4.

Die Ventilkugel 2, die in dem Kugelventil 1 als Absperrelement dient, weist in üblicher Weise zentral eine zylinderförmige Durchgangsöffnung 5 auf. In der Figur 1 ist die Ventilkugel 2 in ihrer Offenstellung dargestellt, in der die Durchgangsöffnung 5 zwei fluchtende und einander gegenüberliegende Anschlussstutzen 4a, die Bestandteil des Gehäuses 4 sind, miteinander verbindet, so dass ein Fluid durch das Kugelventil 1 hindurch strömen kann. Um die Ventilkugel 2 aus ihrer Offenstellung in ihre Schließstellung bewegen zu können, ist diese in der Tragstruktur 3 um eine im vorliegenden Fall vertikale Achse A drehbar gelagert. Hierfür weist die Ventilkugel 2 im Bereich ihres unteren Endes einen kreisrunden Zapfen 2a auf, dessen Längsachse L parallel zur Achse A verläuft. Auch verläuft die Längsachse L des Zapfens 2a rechtwinklig zur Durchflussrichtung D der Durchgangsöffnung 5. An dem dem Zapfen 2a gegenüberliegenden oberen Ende der Ventilkugel 2 ist eine Aussparung 2b vorgesehen, in die formschlüssig eine Stellachse 7 eingreift. Über diese Stellachse 7 kann von außen die Ventilkugel 2 aus ihrer Offenstellung in ihre Schließstellung oder umgekehrt bewegt werden. Die formschlüssige Verbindung zwischen der Stellachse 7 und der Aussparung 2b kann beispielsweise als Vieleck oder Torx-Verbindung sowie auch einfach als Schlitz mit rechteckigem Querschnitt ausgebildet sein.

Die Ventilkugel 2 an sich ist in einer Hybrid- beziehungsweise Verbund-Bauweise hergestellt, Im Inneren der Ventilkugel 2, die durch die Durchgangsöffnung 5 bedingt im wesentlichen hülsenförmige ist, befindet sich ein Tragelement 2c, das aus einem wärmefesten technischen Hochleistungskunststoff, wie beispielsweise glasfaserverstärktem Polyamid, hergestellt ist. Um eine Leichtbauweise der Ventilkugel 2 zu erreichen, weist dieses Tragelement 2c soweit möglich umschlossene Hohlräume 8 auf, wie sie beispielsweise in der Figur im Bereich des Zapfens 2a dargestellt sind. Dieses Tragelement 2c wird in einem Spritzgussverfahren mit einem medienbeständigen Kunststoff in Form einer Deckschicht 2d umhüllt, um die endgültige Form der Ventilkugel 2 zu erreichen. Als Kunststoffe für die Deckschicht 2d kommen Fluorkunststoffe, Polyäthylen, Polyoxymethylen (POM) oder Elastomere in Frage. Vor dem Aufspritzen der Deckschicht 2d wird die Oberfläche des Tragelements 2c mit einem Haftvermittler 2e beziehungsweise Primer in Form einer Verbindungsschicht vorbereitet. Der Haftvermittler 2e kann auch ein gespritztes Copolymer sein. Die Deckschicht 2d umschließt das Tragelement 2c vollständig, so dass das Tragelement 2c nicht in Kontakt mit dem Medium beziehungsweise Fluid kommt, das durch die Rohrleitungen und somit durch das Kugelventil 1 geführt wird. Eine Verbindung ohne den Haftvermittler 2e ist auch möglich. Die Deckschicht 2d weist etwa eine Dicke von 5 bis 25mm, vorzugsweise 8 bis 10mm, auf und kann spanend oder in anderer geeigneter Weise bearbeitet werden, um die gewünschte beziehungsweise erforderliche Rundheit der Ventilkugel 2 zu erreichen. Die derart ausgebildete Ventilkugel 2 zeichnet sich durch ein geringes Einsatzgewicht, eine hohe Beständigkeit gegen aggressive Medien und hohe Formstabilität aus. Durch die hohe Formstabilität wird vermieden, dass auch bei hohem, im geschlossenen Zustand an den Ventilkugel 2 anstehendem Drücken, durch eine Verformung der Ventilkugel 2 hervorgerufene Losbrechmomente das Öffnen des Kugelventils 1 erschweren.

Die zuvor beschriebene Ventilkugel 2 ist in der Tragstruktur 3 um die Achse A drehend gelagert und über ein Dichtelement 9 gegenüber der Tragstruktur 3 abgedichtet. Die Tragstruktur 3 ist aus mehreren Bauteilen aufgebaut und zwar einem ersten Tragring 10a, einem hülsenförmigen Verbindungselement 11 und einem zweiten Tragring 10b. Der erste Tragring 10a, das Verbindungselement 11 und der zweite Tragring 10b sind in Durchflussrichtung D gesehen hintereinander angeordnet. Mit anderen Worten ausgedrückt verbindet das Verbindungselement 11 den ersten Tragring 10a mit dem hiervon beabstandeten zweiten Tragring 10b, um die die Ventilkugel 2 umschließende Tragstruktur 3 auszubilden, Jeder der beiden Tragringe 10a und 10b weisen ein Anschlussteil 10c auf, das jeweils von dem Kunststoff des Anschlussstutzens 4a des Gehäuses 4 umschlossen ist, und einem Tragteil 10d, die jeweils die Ventilkugel 2 von gegenüberliegenden Enden im Bereich ihrer in Durchflussrichtung D gesehen vorderen und hinteren Enden ringförmig umschließen. Auch weisen die Tragteile 10d jeweils an ihrer der Ventilkugel 2 zugewandten Seite eine Kreisbogenfläche 10e auf, die der Dichtfläche 2f der äußeren Oberfläche der Ventilkugel 2 folgt. Außerdem sind die Tragringe 10a und 10b in dem Bereich ihres Anschlussteils 10c gitterartig mit Öffnungen 13 versehen, damit der im Spritzgussverfahren eingebrachte Kunststoff des Gehäuses 4 das Anschlussteil 10c durchdringen kann und somit bei Ausbildung des Anschlussstutzens 4a dieser einen innigen Verbund mit dem Anschlussteil 10c der Tragringe 10a und 10b erhält.

Des Weiteren ist in jedem der Tragringe 10a und 10b, im Bereich ihrer der Ventilkugel 2 zugewandten Kreisbogenfläche 10e, eine Ausnehmung 12 vorgesehen, die im Querschnitt gesehen dreieckförmig ausgebildet ist, wobei die ringförmige Ausnehmung 12 zwei rechtwinklig zueinander ausgerichtete Anlageflächen 12a und 12b für das Dichtelement 9 aufweisen, die jeweils parallel zur Durchflussrichtung D und senkrecht hierzu ausgerichtet sind. In dieser Ausnehmung 12 ist das Dichtelement 9 aufgenommen, das den ersten Tragring 10a bzw. den zweiten Tragring 10b gegenüber der Dichtfläche 2f der Ventilkugel 2 abdichtet.

Insgesamt gesehen weist jeder der beiden Tragringe 10a und 10b eine rohrförmige Gestalt auf, die im Bereich des jeweiligen Anschlussteils 10c zylinderförmig und gitterartig ausgebildet ist und in dem anschließenden Tragteil 10d eine vergrößerte Wanddicke aufweist zur Aufnahme der im Betrieb auf die Ventilkugel 2 auftretenden Kräfte und sich in Richtung der Ventilkugel 2 mit seiner Kreisbogenfläche 10e erweitert, Es ist ersichtlich, dass hierdurch zwischen der Dichtfläche 2f der Ventilkugel 2 und der Kreisbogenfläche 10e der Tragringe 10a und 10b nur ein geringer Spalt 14 verbleibt und somit das Kugelventil 1 insgesamt nur einen geringen Totraum aufweist, falls Medien über das Dichtelement 9 hinaus in Richtung der Ventilkugel 2 beziehungsweise der Stellachse 7 durchdringen sollten. Der Spalt 14 weist eine Breite von 1/10mm bis 5/10mm auf.

Auf der dem Ventilkörpers 2 abgewandten Außenseite 10f sind der erste Tragring 10a und der zweite Tragring 10b im Wesentlichen zylinderförmig ausgebildet. Jedoch ist an dieser Außenseite 10f, die der Ventilkugel 2 abgewandt ist, an jedem der Tragringe 10a und 10b ein treppenartig sich nach außen erstreckender Ansatz 10g vorgesehen, der somit eine im Wesentlichen vertikal zur Durchflussrichtung D ausgerichtete Anlagefläche 10h ausbildet. Der erste Tragring 10a und der zweite Tragring 10b sind zur Ausbildung der Tragstruktur 3 jeweils von den Enden in das im Wesentlichen hülsenförmige und eine zylindrische Innenseite 11a aufweisende Verbindungselement 11 eingeschoben. Auch das Verbindungselement 11 weist an seinen beiden gegenüberliegenden Enden an seiner Innenfläche 11 a eine nach außen gerichtete treppenartige Erweiterung 11 b auf, die eine im Wesentlichen senkrecht zur Durchflussrichtung D ausgerichtete Anlagefläche 11c ausbildet. Der Abstand a zwischen den beiden Anlageflächen 11 c bestimmt somit den Abstand der beiden in das Verbindungselement 11 eingeschobenen Tragringe 10a und 10b und somit im Endeffekt die Größe des zwischen den Kreisbogenflächen 10e und der Dichtfläche 2f des Ventilkörpers 2 verbleibenden Spaltes 14 sowie der Vorspannung des Dichtelements 9 beim Einspannen der Ventilkugel 2 in die Tragstruktur 3.

Um den ersten Tragring 10a und den zweiten Tragring 10b jeweils in den gegenüberliegenden Enden des Verbindungselementes 11 zu halten, sind zwei Halteteile 15a, 15b vorgesehen, die im Querschnitt gesehen u-förmig und mit einem langen Schenkel 15c und einem kurzen Schenkel 15d ausgebildet sind. Im eingebauten Zustand des Halteteils 15a, 15b liegt der lange Schenkel 15c jeweils an einer dem Dichtelement 9 gegenüberliegenden Haltefläche 10i an, die rechtwinklig zur Durchflussrichtung D des Kugelventils 1 ausgerichtet ist und bündig mit einer Außenfläche 11d des Verbindungselementes 11 abschließt. Der kurze Schenkel 15d des Halteteils 15a, 15b liegt an einer Gegenfläche 11e des Verbindungselementes 11 an. Diese Gegenfläche 11e ist ebenfalls rechtwinklig zur Durchflussrichtung D des Kugelventils 1 ausgerichtet. Das klammerartige Halteteil 15a, 15b hat somit die Aufgabe jeweils mit seinen langen Schenkeln 15c von außen den ersten Tragring 10a und den zweiten Tragring 10b soweit in die offenen Enden des Verbindungselementes 11 hinein zu drücken, bis deren Anlageflächen 10h an den Anlageflächen 11c des Verbindungselementes zur Anlage kommen. Um diese Haltekraft aufbringen zu können, stützt sich das Halteteil 15a. 15b mit seinem kurzen Schenkel 15d an einer Gegenfläche 11e des Verbindungselementes 11 ab.

Für die Montage der Halteteile 15a, 15b ist vorgesehen, diese zweiteilig auszugestalten und jeweils eines der beiden Enden gelenkig miteinander zu verbinden und das andere Ende über eine Art Rast- bzw. Schnappverbindung zu schließen. Neben dieser mechanischen Verklammerung der beiden Tragringe 10a und 10b über das Verbindungselement 11 mittels des Halteteils 15a, 15b ist vorgesehen, die Innenfläche 11a des Verbindungselementes 2a und die Außenseite 10f der beiden Tragringe 10a und 10b zusätzlich abzudichten oder miteinander zu verkleben.

Zusätzlich weist das Verbindungselement 11 in Durchflussrichtung D gesehen im Bereich seiner Mitte eine Hülse 11f auf, in der die Stellachse 7 drehend gelagert ist und über Dichtringe 16 abgedichtet ist. Diese Hülse 11f ist mit seiner Längserstreckung rechtwinklig zur Durchflussrichtung D ausgerichtet.

Die Tragstruktur 3, die im Wesentlichen aus dem ersten Tragring 10a, dem Verbindungselement 11, dem zweiten Tragring 10b und den beiden Haltelementen 15a, 15b gebildet ist, wird im Wesentlichen im Spritzgussverfahren aus sogenannten technischen Hochleistungskunststoffen hergestellt, die sich durch eine hohe Festigkeit und gleichzeitig eine Wärmefestigkeit auszeichnen. Beispielsweise sei hier glasfaserverstärktes Polyamid genannt. Im Falle der Verwendung von Polyamid sind die Bereiche der Flächen der Tragstruktur 3 mit einer Schutzschicht 17 überzogen, die mit dem Medium in den nicht dargestellten Rohrleitungen und somit in dem Kugelventil 1 in Verbindung kommen können. Als Schutzschicht 17 kann ein Haftvermittler oder vorzugsweise ein gespritztes Copolymer zum Einsatz kommen. Außerdem sind alle Flächen, vorzugsweise die äußeren Flächen der Tragstruktur 3 mit einem Haftvermittler 18 oder vorzugsweise einem gespritzten Copolymer als Verbindungsschicht umgeben, um einen innigen Verbund zwischen dem Kunststoff des Gehäuses 4 und der Tragstruktur 3 zu erreichen.

Der Haftvermittler 18 beginnt somit im Bereich der Außenseite der Hülse 11f und setzt sich im Bereich der Außenfläche 11d des Verbindungselementes 11 fort, umschließt dann den kurzen Schenkel 15d des Halteteils 15a, 15b, geht dann über in den langen Schenkel 15c des Halteteils 15a, 15b und trifft dort auf das Anschlussteil 10c der Tragringe 10a und 10b.

Es ist ersichtlich, dass die Tragstruktur 3 und somit auch der Haftvermittler 18 die Ventilkugel 2 vollständig umgibt und keine Öffnungen bestehen, in denen Kunststoff des Gehäuses 4 beim Spritzgussvorgang in Richtung der Ventilkugel 2 dringen kann. Die Tragstruktur 3 und die Ventilkugel 2 bilden somit bereits ein dichtes und funktionsfähiges Kugelventil 1.

In dem letzten Herstellungsschritt des Kugelventils 1 wird die Tragstruktur 3 mit der Ventilkugel 2 und der Stellachse 7, die von dem Haftvermittler 18 umgeben sind, in eine Spritzgussform eingelegt und das Gehäuse 4 mit den durch Umspritzen der vorgenannten Teile mit einem Thermoplast, vorzugsweise Polyäthylen oder Polyvinylchlorid, oder Elastomere erstellt. Das Gehäuse 4 hat die Aufgabe die Tragstruktur 3 gegen mechanische und chemische Belastungen zu schützen, da die Hochleistungswerkstoffe der Tragstruktur 3 meistens nicht sehr resistent sind. Die Anschlussstutzen 4a weisen im vorliegenden Fall eine Öffnung 6 auf, deren Öffnungsquerschnitt dem der Durchgangsöffnung 5 der Ventilkugel 2 entspricht. Auch ermöglicht der verwendete Thermoplast im Bereich der Anschlussstutzen 4a die anzuschließenden und nicht dargestellten Rohrleitungen anzuschweißen, zu verpressen oder über die Außenoberflächen der Anschlussstutzen 4a einzuschneidende Gewinde anzuschließen.

Unter Haftvermittler beziehungsweise Primer werden dünne Schichten im µm-Bereich verstanden, die im Flammspritzverfahren, im Plasmaverfahren, im Wirbelsinterverfahren aus einem geeigneten Material, wie beispielsweise Kunststoffpulver, Kunststoffpulver als Emulsion in geeignetem Lösungsmittel, aufgebracht werden. Das Material des Haftvermittlers ist in der Regel aus Werkstoffen (Kunststoffen), die mit den zu verbindenden Werkstoffen kompatibel sind. Die Haftverbindung geschieht durch Effekte wie Adhäsion, Diffusion der Molekülstruktur und/oder Wasserstoffbrückenbildung.

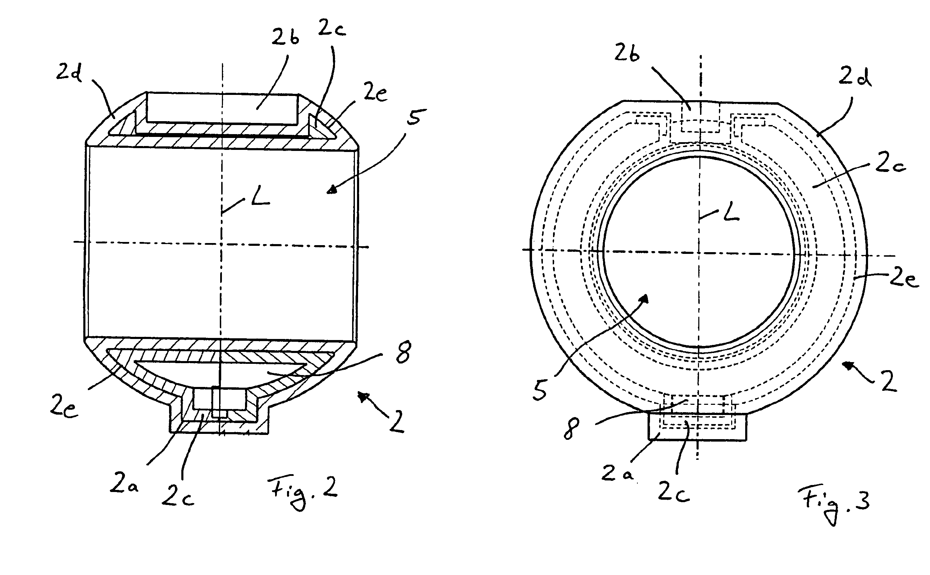

In der Figur 2 ist eine Detailansicht des Ventilkörpers 2 des Kugelventils nach Figur 1, aus der die zuvor beschriebene Aufteilung des Ventilkörpers 2 in ein Tragelement 2c, eine Verbindungsschicht 2e und eine Deckschicht 2d gut zu erkennen ist. Im Bereich des Ansatzes 2a wird durch das gerüstartige Tragelement 2c eine ausreichende Stabilität erreicht, so dass über eine Hohlraum 8 innerhalb des Tragelements 2c zusätzlich eine Gewichtsersparnis erreicht werden kann.

Die Figur 3 zeigt eine Seitenansicht von Figur 2.

Die Ausgestaltung der Kunststoff-Ventilkugel wird als eigenständige erfinderische Idee angesehen. Erfindungswesentliches Merkmal zur Erreichung einer verbesserten Formstabilität einer Kunststoff-Ventilkugel eines Kugelventils, die eine Durchgangsöffnung aufweist und in einem Gehäuse des Kugelventils zwischen einer Offen- und einer Schließstellung drehbar lagerbar ist, ist, die Ventilkugel nach Art eines Verbundbauteils aus einem Tragelement und einer Deckschicht aufzubauen. Hierdurch können in der Ventilkugel die Eigenschaften hohe Formstabilität durch das Tragelement und gute Beständigkeit gegen Medien durch die Deckschicht vereint werden. Eine gute Formbeständigkeit führt dazu, dass die Ventilkugel auch unter hohen Betriebsdrücken sich nur gering verformt und somit auch dann noch gut innerhalb des Gehäuses des Kugelventils aus der Schließstellung in die Offenstellung verdreht werden kann, ohne hohe Losbrechmomente in Bezug auf die Ventilkugel überwinden zu müssen. Auch ist das erforderliche Drehmoment über den Verstellbereich der Ventilkugel gleichbleibend. Die Verbundbauweise der Ventilkugel führt zu deren Leichtbau, einer Gewichtsersparnis und einer Materialeinsparung. Auch Ventilkugeln mit großem Durchmesser können gespritzt werden. Es muss keine Herstellung aus extrudiertem Halbzeug erfolgen. Um die gute Beständigkeit gegen Medien zu erreichen, ist vorgesehen, dass die Deckschicht das Tragelement vollständig umgibt. Außerdem können die Deckschichten vorteilhafter Weise an die Anforderungen des Mediums einfach angepasst werden. Besonders vorteilhaft ist vorgesehen, dass das Tragelement aus einem wärmefesten technischen Hochleistungskunststoff, insbesondere glasfaserverstärktem Polyamid, und die Deckschicht aus einem Medium resistenten Kunststoff, insbesondere Fluorkunststoff, Polyäthylen, Polyoxymethylen, Elastomer oder synthetische Duroplaste wie Gummi, hergestellt sind und die mit der Deckschicht in Verbindung stehenden Flächen des Tragelements mit einer Verbindungsschicht als Haftvermittler beschichtet sind. Eine Leichtbauweise der Ventilkugel wird dadurch erreicht, dass das Tragelement mindestens einen eingeschlossenen Hohlraum aufweist. Um eine gute Führung und leichte Verstellbarkeit der Ventilkugel zu ereichen, ist an einem Ende ein nach außen hervor ragender Zapfen angeordnet und an dem gegenüberliegende Ende der Ventilkugel eine Aussparung zur Aufnahme einer Stellachse. Besonders günstig ist vorgesehen, dass ein Hohlraum im Bereich des Zapfens angeordnet ist.

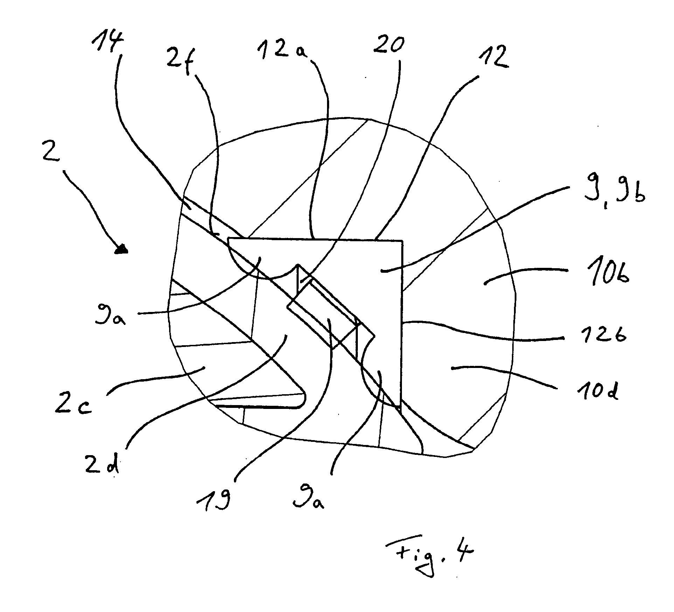

Die Figur 4 zeigt eine vergrößerte Detailansicht eines Dichtelements 9 des Kugelventils 1 nach Figur 1. Aus dieser Figur 4 ist der Querschnitt des ringförmigen Dichtelements 9 in Form einer Profildichtung genau zu erkennen. Das Dichtelement 9 besteht im Wesentlichen aus zwei Dichtkörpern 9a, die über ein Trägerelement 9b miteinander verbunden sind. Die Dichtkörper 9a sind jeweils im Querschnitt gesehen halbkreisförmig, haben die Funktion von Dichtlippen beziehungsweise O-Ringen vergleichbar, da deren halbkreisförmige Außenkontur in Kontakt mit der Dichtfläche 2f der Ventilkugel 2 steht. Die beiden Dichtkörper 9a sind in Wirkungsrichtung des Dichtelements 9 gesehen- also ausgehend von dem das Medium führenden Bereich des Kugelventils 1 hin zu der Stellachse 7 des Kugelventils 1 - hintereinander und voneinander beabstandet angeordnet. Ausgehend von dem zweiten Tragring 10b in Richtung der Dichtfläche 2f der Ventilkugel 2 gesehen ragen die beiden Dichtkörper 9a aus den Trägerelement 9b hervor, so dass zwischen den Dichtkörper 9a eine Aussparung 20 vorhanden. In dieser Aussparung 20 ist zentral zwischen den beiden Dichtkörpern 9a ein ringförmiges Speicherelement 19 angeordnet, das einen rechteckigen Querschnitt aufweist und vorzugsweise aus einem Polyamid-Faserkissen hergestellt. Es sind auch andere Kunststoffe möglich. Auch ist die Ausbildung des Speicherelements 19 als Bürste oder Schaum denkbar, beispielsweise aus Bronze um statische Aufladungen abzuleiten. Das Speicherelement 19 hat die Aufgabe, feine unter den ersten Dichtkörper 9a hindurch gedrungene Partikel aufzunehmen und somit den zweiten Dichtkörper 9a davor zu schützen. Hierdurch wird die Dichtigkeit des zweiten Dichtkörpers 9a erhöht. Außerdem ist das als Faserkissen ausgebildete Speicherelement 19 mit einer Schmierstoff getränkt beziehungsweise gefüllt. Vorzugsweise kommt ein fluorhaltiger Schmierstoff zum Einsatz. Da die Schmierstofffüllung von beiden Dichtkörpern 9a geschützt ist, wird es von dem Medium nicht abgetragen und daher kann auch ein Kugelventil nach Jahren des Stillstandes ohne Adhäsionseffekte wieder in Betreib genommen werden. Auch begünstigt der Schmierstoff die Aufnahme und Festhalten der Partikel.

In der Figur 4 sind die Dichtkörper 9a und das Speicherelement 19 jeweils in ihrer entspannten Form gezeichnet, um deren ursprüngliche Form zu zeigen. Die Dichtkörper 9a und das Speicherelement 19 sind im Einbauzustand natürlich komprimiert und liegen an der Dichtfläche 2f an.

Im Querschnitt gesehen hat das Dichtelement 9 im Wesentlichen die Form eines rechtwinkligen Dreiecks, wobei die Dichtkörper 9a im Bereich der Enden der Hypotenuse hervortreten. Die beiden Katheten stehen im Kontakt mit den Anlageflächen 12a, 12b der Aussparung 12 in dem Tragring 10b.

Die beiden Dichtkörper 9a, das Trägerelement 9b und das Speicherelement 19 sind einteilig ausgeführt. Die Dichtkörper 9a und das Trägerelement 9b werden in einem Spritzgussverfahren aus einem Elastomer, insbesondere Nitrilbutylkautschuk, hergestellt, wobei das Speicherelement 19 während des Spritzgussverfahrens mit den Dichtkörpern 9a und dem Trägerelement 9b verbunden wird. Das Dichtelement 9 wird dann in einem weiteren Herstellungsschritt in die Form für den ersten oder zweiten Tragring 10a, 10b eingelegt und dann von dem Kunststoff der Tragringe 10a, 10b umspritzt.

Auch die Ausgestaltung der Dichtelemente wird als eigenständige erfinderische Idee angesehen. Erfindungswesentliches Merkmal zur Erreichung einer einfachen Herstellung und verbesserten Dichtigkeit bei einem Kugelventil mit einem Gehäuse aus Kunststoff, in dem eine Ventilkugel mit einer Durchgangsöffnung zwischen einer Offen- und einer Schließstellung drehbar gelagert ist, wobei die Ventilkugel gegenüber dem Gehäuse über ringförmige Dichtelemente abgedichtet ist, ist die Dichtelemente jeweils zwei in Kontakt mit der Ventilkugel stehende Dichtkörper aufweisen zu lassen. Die Verbindung der Dichtkörper mit dem Tragring wird dadurch erleichtert, dass die Dichtkörper eines Dichtelements über ein Trägerelement mit einander verbunden sind. Eine Verbesserung der Dichtwirkung ergibt sich daraus, dass die Dichtkörper eines Dichtelements in Wirkungsrichtung des Dichtelements gesehen hintereinander und voneinander beabstandet angeordnet sind. Auch wird die Dichtwirkung dadurch begünstigt, dass die Dichtkörper im Querschnitt gesehen und in Kontaktbereich mit dem Ventilkörper halbkreisförmig nach Art eines O-Rings ausgebildet sind. Eine Entfernung von Verunreinigungen aus dem Medium, das den ersten Ventilkörper passiert hat, wird dadurch erreicht, dass zwischen den Dichtkörpern eines Dichtelements ein Speicherelement angeordnet ist, das im Kontakt mit dem Ventilkörper steht. Der zweite Dichtkörper wird somit nicht von den Verunreinigen in seiner Wirkung beeinträchtigt. Als besonders vorteilhaft hat sich herausgestellt, dass das Speicherelement quaderförmig ist und ein Faserkissen aus Polyamid ist. Besonders vorteilhaft ist, dass in dem Gehäuse ringförmige Aussparungen angeordnet sind, in denen Dichtelemente eingelegt sind, die Aussparungen zwei rechtwinklig zueinander angeordnete Anlageflächen aufweist und die Dichtelemente im Querschnitt gesehen im Wesentlichen die Form eines rechtwinkligen Dreiecks haben. Bevorzugt ist vorgesehen, dass die Dichtkörper aus dem Gehäuse in Richtung des Ventilkörpers hervor ragen. Die Handhabung des Dichtelements wird dadurch erleichtert, dass jedes Dichtelement mit den Dichtkörpern einteilig ist und aus einem Elastomer, insbesondere Nitrilbutyl-Kautschuk, hergestellt ist. Es ist vorgesehen, dass jedes Dichtelement über eine Tragstruktur aus zwei gegenüberliegenden, die Ventilkugel aufnehmenden Tragringen in dem Gehäuse gelagert ist. Diese Tragstruktur weist eine hohe Formstabilität auf, so dass das Dichtelement nur geringe Verformungen ausgleichen muss.

### Bezugszeichenliste

- 1: Kugelventil
- 2: Ventilkugel
- 2a: Zapfen
- 2b: Aussparung
- 2c: Tragelement
- 2d: Deckschicht
- 2e: Haftvermittler
- 2f: Dichtfläche
- 3: Tragstruktur
- 4: Gehäuse
- 4a: Anschlussstutzen
- 5: Durchgangsöffnung
- 6: Öffnung
- 7: Stellachse
- 8: Hohlraum
- 9: Dichtelement
- 10a: erster Tragring
- 10b: zweiter Tragring
- 10c: Anschlussteil
- 10d: Tragteil
- 10e: Kreisbogenfläche
- 10f: Außenseite
- 10g: Ansatz
- 10h: Anlagefläche
- 10i: Haltefläche
- 11: Verbindungselement
- 11a: Innenfläche
- 11 b: Erweiterung
- 11 c: Anlagefläche
- 11d: Außenfläche
- 11 e: Gegenfläche
- 11f: Hülse
- 12: Aussparung
- 12a: Anlagefläche
- 12b: Anlagefläche
- 13: Öffnungen
- 14: Spalt
- 15a: erstes Halteteil
- 15b: zweites Halteteil
- 15c: langer Schenkel
- 15d: kurzer Schenkel
- 16: Dichtringe
- 17: Schutzschicht
- 18: Haftvermittler
- 19: Speicherelement
- 20: Aussparung

- a: Abstand
- A: Achse
- D: Durchflussrichtung
- L: Längsachse

## Patentansprüche

1. Kugelventil mit einem Gehäuse (4) aus Kunststoff, in dem eine von dem Kunststoff ummantelte Tragstruktur (3) angeordnet ist, in der eine Ventilkugel (2) mit einer Durchgangsöffnung (5) zwischen einer Offen- und einer Schließstellung drehbar gelagert ist, wobei die Tragstruktur (3) aus zwei gegenüberliegenden, die Ventilkugel (2) aufnehmenden Tragringen (10a, 10b) und einem diese Tragringe (10a, 10b) verbindenden Verbindungselement (11) besteht, wobei die Tragstruktur (3) die Ventilkugel (2) vollständig von dem Kunststoff des Gehäuses (4) trennt, **dadurch gekennzeichnet, dass** die Tragstruktur (3) von dem Kunststoff des Gehäuses (4) n umspritzt ist, an dem Verbindungselement (11) Anlageflächen (11c) und an den Tragringen (10a, 10b) Anlageflächen (10h) derart angeordnet sind, dass nach einer Verbindung der Tragringe (10a, 10b) über das Verbindungselement (11) die Tragringe (10a, 10b) einen vorgewählten Abstand (a) zueinander aufweisen, so dass ein geringer Spalt (14) zwischen der Ventilkugel (2) und den Tragringen (10a, 10b) verbleibt, die Tragringe (10a, 10b) in das hülsenförmige Verbindungselement (11) eingesteckt sind und jeweils über ein Halteteil (15a, 15b) in der eingesteckten Position gehalten sind und der Kontaktbereich zwischen den Tragringen (10a, 10b) und dem Verbindungselement (11) abgedichtet oder verklebt ist.

2. Kugelventil nach Anspruch 1, **dadurch gekennzeichnet, dass** die Tragringe (10a, 10b) von gegenüberliegenden Enden in das Verbindungselement (11) eingesteckt und die Tragringe (10a, 10b) an einem stufenartigen Ansatz (10g) eine Anlagefläche (10h) ausbilden, die an einer Anlagefläche (11c), die an einem an einer stufenartigen Erweiterung (11b) des Verbindungselementes (11) ausgebildet ist, anliegt.

3. Kugelventil nach Anspruch 1 oder 2, **dadurch gekennzeichnet, dass** das Halteteil (15a, 15b) als u-förmige Klammer mit einem langen Schenkel (15c) und einem kurzen Schenkel (15d) ausgebildet ist, der lange Schenkel (15c) in Kontakt mit dem Tragring (10a, 10b) steht und der kurze Schenkel (15d) sich an dem Verbindungselement (11) abstützt.

4. Kugelventil nach einem der Ansprüche 1 bis 3, **dadurch gekennzeichnet, dass** das ringförmige Halteteil (15a, 15b) zweiteilig ausgebildet, über ein Gelenk aufklappbar und eine Rastverbindung schließbar ist.

5. Kugelventil nach einem der Ansprüche 1 bis 4, **dadurch gekennzeichnet, dass** die Tragringe (10a, 10b) an ihren der Ventilkugel (2) abgewandten Seiten ein röhrförmiges Anschlussteil (10c) aufweisen, das von dem Teil des Kunststoffes des Gehäuses (4) umschlossen ist, der einen Anschlussstutzen (4a) ausbildet.

6. Kugelventil nach einem der Ansprüche 1 bis 5, **dadurch gekennzeichnet, dass** das Gehäuse (4) aus einem thermoplastischen Kunststoff, insbesondere Polyäthylen oder Polyvinylchlorid, oder einem Elastomer gespritzt ist, die Tragstruktur (3), die aus den Tragringen (10a, 10b), dem Verbindungselement (11) und dem Halteteilen (15a, 15b) besteht, aus einem wärmefesten technischen Hochleistungskunststoff, insbesondere glasfaserverstärktem Polyamid, gespritzt sind, die mit dem Gehäuse (2) in Verbindung stehenden Flächen mit einem Haftvermittler (18) als Verbindungsschicht beschichtet sind und die mit dem Medium in Verbindung stehenden Flächen der Tragstruktur (3) mit einer mediumbeständigen Schutzschicht (17) beschichtet sind.

7. Kugelventil nach Anspruch 6, **dadurch gekennzeichnet, dass** die Ventilkugel (2) nach Art eines Verbundbauteils aus einem Tragelement (2c) und einer das Deckschicht (2d) aufgebaut ist, die Deckschicht (2d) das Tragelement (2c) vollständig umgibt und das Tragelement (2c) aus einem wärmefesten technischen Hochleistungskunststoff, insbesondere glasfaserverstärktem Polyamid, und die Deckschicht (2d) aus einem Medium resistenten Kunststoff, insbesondere Fluorkunststoff, Polyäthylen, Polyoxymethylen oder einem Elastomer, hergestellt sind.

8. Kugelventil nach einem der Ansprüche 1 bis 7, **dadurch gekennzeichnet, dass** zwischen der Ventilkugel (2) und den Tragringen (10a, 10b) jeweils ein Dichtelement (9) angeordnet ist.

## Claims

1. Ball valve having a body (4) of plastics material in which a supporting structure (3) enclosed by the plastics material is arranged, in which supporting structure (3) a valve ball (2) having a through-opening (5) is mounted to be rotatable between an open and a closed position, the supporting structure (3) comprising two oppositely situated supporting rings (10a, 10b) which receive the valve ball (2), and a connecting member (11) which connects the said supporting rings (10a, 10b), the supporting structure (3) completely separating the valve ball (2) from the plastics material of the body (4), **characterised in that** the plastics material of the body (4) is injection moulded around the supporting structure (3), and mating surfaces (11c) are so arranged on the connecting member (11) and mating surfaces (10h) are so arranged on the supporting rings (10a, 10b) that, once the supporting rings (10a, 10b) have been connected by means of the connecting member (11), the said supporting rings (10a, 10b) are at a preselected distance (a) from one another, thus leaving a small gap (14) between the valve ball (2) and the supporting rings (10a, 10b), and the supporting rings (10a, 10b) are inserted in the sleeve-like connecting member (11) and are each held in the inserted position by a retaining part (15a, 15b), and the region in which there is contact between the supporting rings (10a, 10b) and the connecting member (11) is sealed off or bonded together.

2. Ball valve according to claim 1, **characterised in that** the supporting rings (10a, 10b) are inserted in the connecting member (11) from opposite ends and the said supporting rings (10a, 10b) form, at a step-like projection (10g), a mating surface (10h) which rests against a mating surface (11c) which is formed on a step-like extension (11b) of the connecting member (11).

3. Ball valve according to claim 1 or 2, **characterised in that** the retaining part (15a, 15b) takes the form of a U-shaped clip having a long side (15c) and a short side (15d), the long side (15c) being in contact with the supporting ring (10a, 10b) and the short side (15d) being supported on the connecting member (11).

4. Ball valve according to one of claims 1 to 3, **characterised in that** the retaining part (15a, 15b), which is annular, is of a two-piece form and can be opened by means of a joint and can be closed by means of a latching connection.

5. Ball valve according to one of claims 1 to 4, **characterised in that**, on their sides remote from the valve ball (2), the supporting rings (10a, 10b) have a tubular joining portion which is surrounded by that part of the plastics material of the body (4) which forms a connecting nozzle (4a).

6. Ball valve according to one of claims 1 to 5, **characterised in that** the body (4) is injection moulded from a thermoplastic plastics material, and in particular from polyethylene or polyvinyl chloride, or from an elastomer, the supporting structure (3), which comprises the supporting rings (10a, 10b), the connecting member (11) and the retaining parts (15a, 15b), is injection moulded from a heat-resistant high-performance engineering plastics material, and in particular from a glass-fibre reinforced polyamide, the surfaces of the supporting structure (3) which are in contact with the body (2) are coated with an adhesion primer (18) to act as a connecting layer, and the surfaces thereof which are in contact with the medium are coated with a protective layer (17) resistant to the medium.

7. Ball valve according to claim 6, **characterised in that** the valve ball (2) is constructed after the fashion of a composite component from a load-bearing member (2c) and a covering layer (2d), the covering layer (2d) completely surrounds the load-bearing member (2c), and the load-bearing member (2c) is made from a heat-resistant high-performance engineering plastics material, and in particular from glass-fibre reinforced polyamide, and the covering layer (2d) is made from a medium-resistant plastics material and in particular from a fluoroplastic, polyethylene, polyoxymethylene or an elastomer.

8. Ball valve according to one of claims 1 to 7, **characterised in that** a sealing member (9) is arranged between the valve ball (2) and each of the supporting rings (10a, 10b).

## Revendications

1. Soupape à bille comportant un boîtier (4) en matière synthétique dans lequel est disposée une structure de support (3), enveloppée de matière synthétique, dans laquelle une bille de soupape (2) dotée d'une ouverture de passage (5) est montée de façon à pouvoir tourner entre une position d'ouverture et une position de fermeture, la structure de support (3) étant constituée de deux bagues de support (10a, 10b) opposées qui reçoivent la bille de soupape (2) et d'un élément de liaison (11) reliant ces bagues de support (10a, 10b), la structure de support (3) séparant totalement la bille de soupape (2) de la matière synthétique du boîtier (4), **caractérisée en ce que** la structure de support (3) est enrobée par la matière synthétique du boîtier (4), **en ce que** des surfaces d'appui (11c) sont disposées sur l'élément de liaison (11) et des surfaces d'appui (10h) sont disposées sur les bagues de support (10a, 10b) de telle sorte que les bagues de support (10a, 10b) sont disposées à une distance choisie (a) l'une de l'autre après avoir relié les bagues de support (10a, 10b) au moyen de l'élément de liaison (11) de sorte qu'une petite fente (14) est ménagée entre la bille de soupape (2) et les bagues de support (10a, 10b), **en ce que** les bagues de support (10a, 10b) sont insérées dans l'élément de liaison (11) en forme de manchon et sont maintenues chacune dans la position insérée par une pièce de retenue (15a, 15b) et **en ce que** la région de contact entre les bagues de support (10a, 10b) et l'élément de liaison (11) est rendue étanche ou est collée.

2. Soupape à bille selon la revendication 1, **caractérisée en ce que** les bagues de support (10a, 10b) sont insérées depuis des extrémités opposées dans l'élément de liaison (11) et **en ce que** les bagues de support (10a, 10b) forment au niveau d'une saillie en gradin (10g) une surface d'appui (10h) qui porte sur une surface d'appui (11 c) qui est formée au niveau d'une extension en gradin (11 b) de l'élément de liaison (11).

3. Soupape à bille selon la revendication 1 ou 2, **caractérisée en ce que** la pièce de retenue (15a, 15b) est conformée en bride en U possédant une branche longue (15c) et une branche courte (15d), **en ce que** la branche longue (15c) est en contact avec la bague de support (10a, 10b) et **en ce que** la branche courte (15d) s'appuie sur l'élément de liaison (11).

4. Soupape à bille selon l'une des revendications 1 à 3, **caractérisée en ce que** la pièce de retenue annulaire (15a, 15b) est en formée de deux parties, **en ce qu'**elle est repliable au moyen d'une articulation et **en ce qu'**elle peut être fermée par une liaison à encliquetage.

5. Soupape à bille selon l'une des revendications 1 à 4, **caractérisée en ce que** les bagues de support (10a, 10b) possèdent, sur leur côté opposé à la bille de soupape (2), une pièce de raccordement tubulaire (10c) qui est entourée par la pièce en matière synthétique du boîtier (4) qui forme un raccord (4a).

6. Soupape à bille selon l'une des revendications 1 à 5, **caractérisée en ce que** le boîtier (4) est moulé par injection à partir d'une matière synthétique thermoplastique, notamment du polyéthylène ou du chlorure de polyvinyle, ou d'un élastomère, **en ce que** la structure de support (3) qui est constituée des bagues de support (10a, 10b), de l'élément de liaison (11) et des pièces de retenue (15a, 15b), est moulée par injection à partir d'une matière synthétique technique à haute performance, thermorésistante, notamment du polyamide renforcé par des fibres de verre, **en ce que** les surfaces en liaison avec le boîtier (2) sont recouvertes d'un agent adhésif (18) utilisé comme couche de liaison et **en ce que** les surfaces de la structure de support (3), qui sont en liaison avec le fluide, sont recouvertes d'une couche de protection (17) résistante au fluide.

7. Soupape à bille selon la revendication 6, **caractérisée en ce que** la bille de soupape (2) est formée à la manière d'un élément composite constitué d'un élément de support (2c) et d'une couche de revêtement (2d), **en ce que** la couche de revêtement (2d) entoure totalement l'élément de support (2c) et **en ce que** l'élément de support (2c) est fabriqué à partir d'une matière synthétique technique à haute performance, thermorésistante, notamment du polyamide renforcé par des fibres de verre, et **en ce que** la couche de revêtement (2d) est fabriquée à partir d'une matière synthétique résistante au fluide, notamment une matière synthétique fluorée, du polyéthylène, du polyoxyméthylène ou un élastomère.

8. Soupape à bille selon l'une des revendications 1 à 7, **caractérisée en ce qu'**un élément d'étanchéité (9) est disposé entre la bille de soupape (2) et chacune des bagues de support (10a, 10b).
